# EUROPÄISCHE PATENTSCHRIFT

(11) **EP 4 466 780 B1**
(45) Veröffentlichungstag und Bekanntmachung des Hinweises auf die Patenterteilung: **01.07.2026**
(21) Anmeldenummer: 24705096.6
(22) Anmeldetag: 12.02.2024
(51) Int. Cl.: H02K 15/0428, H02K 15/36

(54) **VORRICHTUNG ZUM VERDREHEN VON LEITERSTÜCKEN UND EIN VERFAHREN ZUM MONTIEREN UND/ODER DEMONTIEREN EINER DERARTIGEN VORRICHTUNG**
DEVICE FOR TWISTING WINDING WIRE SECTIONS AND A METHOD FOR ASSEMBLING AND/OR DISASSEMBLING SUCH A DEVICE
DISPOSITIF DE RETORDAGE DE SECTIONS DE CONDUCTEURS D'ENROULEMENT ET MÉTHODE DE MONTAGE ET/OU DE DÉMONTAGE D'UN TEL DISPOSITIF

(30) Priorität: 22.03.2023 DE 102023107180
(43) Veröffentlichungstag der Anmeldung: 27.11.2024
(73) Patentinhaber: Gehring Technologies GmbH + Co. KG, 73760 Ostfildern (DE)
(72) Erfinder: FREITAG, Martin, 72622 Nürtingen (DE); SCHEEFF, Sebastian, 73728 Esslingen (DE); NECKER, Jörg, 72622 Nürtingen (DE)
(74) Vertreter: DREISS Patentanwälte PartG mbB
(86) Internationale Anmeldenummer: PCT/EP2024/053428
(87) Internationale Veröffentlichungsnummer: WO 2024/193898

(56) Entgegenhaltungen:
- DE-A1- 102018 103 927
- JP-A- 2001 102 236
- JP-A- H07 227 734
- US-B2- 7 941 910

## Beschreibung

Die Erfindung betrifft eine Vorrichtung zum Verdrehen von Leiterstücken, die mindestens einen Schenkel aufweisen, insbesondere Hairpins, die vorzugsweise mit einem rechteckigem Leiterquerschnitt ausgebildet sind, die in einem Stator angeordnet sind und aus dem Stator, insbesondere in einer axialen Richtung, herausragen, mit Merkmalen des Anspruchs 1 und ein Verfahren zum Montieren und/oder Demontieren mindestens eines Werkzeugs einer Vorrichtung zum Verdrehen von Leiterstücken, die mindestens einen Schenkel aufweisen, insbesondere Hairpins, die vorzugsweise mit einem rechteckigem Leiterquerschnitt ausgebildet sind, mit Merkmalen des nebengeordneten Anspruchs.

Bei der Fertigung von elektromechanischen Wandlern, insbesondere Elektromotoren, insbesondere für Traktionsantriebe, werden einzelne Wicklungselemente (Leiterstücke, Steckspulen, sog. "Hairpins") hergestellt, die im weiteren Prozess zu einer Statorwicklung weiterverarbeitet werden. Hierzu werden die einzelnen Leiterstücke bzw. Hairpins in den Statorkern eingesetzt.

Die im Statorkern eingesetzten Leiterstücke werden in Umfangsrichtung verformt (Twisting bzw. Twisten, Verdrehen). Anschließend werden die einzelnen Leiterstücke miteinander verschweißt, so dass sie die Wicklungen des Stators bilden.

Vorrichtungen zum Verdrehen von in den Stator eingesetzten Leiterstücken sind aus dem Stand der Technik bekannt. So offenbart DE 10 2018 103 927 A1 eine derartige Vorrichtung.

US 7 941 910 B2 beschreibt die Entnahme von Steckspulen aus einem Twistwerkzeug.

JP 2001 102236 A beschreibt eine Vorrichtung zum Wickeln herkömmlicher Statorspulen.

D4 JP H07 227734 A beschreibt eine Werkzeugmaschine mit automatischem Werkzeugwechsel.

Dabei weist die Vorrichtung mehrere zylindrisch geformte und koaxial ineinander gesteckte Werkzeuge, mit denen die Leiterstücke verdreht werden. Abhängig von dem Stator und/oder den Leiterstücken können bspw. unterschiedlich große und/oder unterschiedlich viele Werkzeuge verwendet werden. Dies führt zu einem komplexen Aufbau der Vorrichtung.

Nachteilig dabei ist, dass ein Wechsel der einzelnen Werkzeuge aufwendig ist. Es ist wünschenswert möglichst schnell und/oder automatisiert einen Wechsel der einzelnen Werkzeuge umzusetzen, sodass die Vorrichtung, bspw. bei einem Formatwechsel, möglichst schnell wieder in Betrieb genommen werden kann.

Es ist daher Aufgabe der vorliegenden Erfindung eine Vorrichtung zum Verdrehen von Leiterstücken und ein Verfahren zum Montieren und/oder Demontieren einer derartigen Vorrichtung bereitzustellen, wobei ein Wechsel der einzelnen Werkzeuge möglichst schnell und/oder automatisiert umgesetzt werden kann.

Die obige Aufgabe wird durch eine Vorrichtung zum Verdrehen (Twisten) von Leiterstücken, die mindestens einen Schenkel aufweisen, die in einem Stator (oder einem Rotor) angeordnet sind und aus dem Stator (oder dem Rotor), insbesondere in eine axiale Richtung, herausragen, mit den Merkmalen des Anspruchs 1 gelöst.

Die Leiterstücke können als Hairpins ausgebildet sein. Die Leiterstücke können einen rechteckigen Leiterquerschnitt aufweisen.

Die Vorrichtung umfasst mindestens ein Werkzeug zum Verdrehen der aus dem Stator herausragenden Schenkel der Leiterstücke. Das Werkzeug ist (kreis-)zylinderförmig und/oder hülsenförmig ausgebildet. Das Werkzeug weist einen Boden und eine radiale Wandung auf, die den Boden des Werkzeugs umgibt. Das Werkzeug ist um eine Rotationsachse drehbar ausgebildet. Das Werkzeug weist eine Vielzahl von Aufnahmen auf, die entlang einer Kreisbahn um die Rotationsachse des Werkzeugs angeordnet sind. Jede dieser Aufnahmen sind zur Aufnahme mindestens eines Leiterstücks (bzw. mindestens eines aus dem Stator herausragenden Ende eines Schenkels eines Leiterstücks) ausgebildet.

Die Aufnahmen sind in Umfangsrichtung (bzw. entlang des Umfangs) des Werkzeugs angeordnet.

Die Vorrichtung umfasst mindestens einen Werkzeughalter zum Aufnehmen des Werkzeugs.

Das Werkzeug ist von einer Offenstellung in eine Geschlossenstellung überführbar. Das Werkzeug ist von der Geschlossenstellung in die Offenstellung überführbar. In der Offenstellung kann das Werkzeug mit dem Werkzeughalter verbunden oder von dem Werkzeughalter gelöst werden. In der Geschlossenstellung kann das Werkzeug nicht mit dem Werkzeughalter verbunden oder von ihm gelöst werden. Wenn das Werkzeug mit dem Werkzeughalter verbunden ist, kann das Werkzeug arretiert werden, in dem das Werkzeug in die Geschlossenstellung überführt wird.

Zum Verbinden des Werkzeugs mit dem Werkzeughalter, weist das Werkzeug eine Innenverzahnung und der Werkzeughalter eine mit der Innenverzahnung des Werkzeugs korrespondierende Außenverzahnung auf.

Damit kann durch ein Aufstecken bzw. ein Einsetzen des Werkzeugs auf bzw. in den Werkzeughalter eine drehfeste Verbindung zwischen dem Werkzeug und dem Werkzeughalter umgesetzt werden.

Die Vorrichtung umfasst eine Werkzeugwechseleinrichtung. Die Werkzeugwechseleinrichtung ist ausgebildet, um das Werkzeug von der Offenstellung in die Geschlossenstellung zu überführen. Die Werkzeugwechseleinrichtung ist ausgebildet, um das Werkzeug von der Geschlossenstellung in die Offenstellung zu überführen. Die Werkzeugwechseleinrichtung ist ausgebildet, um das Werkzeug von dem Werkzeughalter zu lösen oder mit dem Werkzeughalter zu verbindenden. Mit anderen Worten, die Werkzeugwechseleinrichtung ist ausgebildet, um das Werkzeug von dem Werkzeughalter zu entfernen oder in den Werkzeughalter einzusetzen.

Das Lösen bzw. das Verbinden (das Einsetzen bzw. das Entfernen) des Werkzeugs kann durch eine axiale Relativbewegung zwischen der Werkzeugwechseleinrichtung (bzw. dem Werkzeug) und dem Werkzeughalter umgesetzt werden.

Dadurch kann das Werkzeug in der Offenstellung schnell und/oder automatisiert mit dem Werkzeughalter verbunden (bzw. in den Werkzeughalter eingesetzt) werden und durch ein Überführen in die Geschlossenstellung auf dem Werkzeughalter arretiert werden. Diese Arretierung kann durch ein Überführen des Werkzeugs in die Offenstellung wieder gelöst werden, sodass das Werkzeug in der Offenstellung schnell und/oder automatisiert von dem Werkzeughalter wieder gelöst (bzw. von dem Werkzeughalter entfernt) werden kann. Auch die Überführung des Werkzeugs aus der Offenstellung in die Geschlossenstellung kann schnell und/oder automatisiert umgesetzt werden.

Ein Hairpin im vorliegenden Sinne ist ein Leiterstück mit zwei länglich erstreckten Schenkeln, die über einen Verbindungsabschnitt verbunden sind. Hairpins sind häufig im Wesentlichen U-förmig. Der Verbindungsabschnitt (auch Verbindungsschenkel genannt) kann bogenförmig aber auch abschnittsweise gerade oder stufenförmig ausgebildet sein. Ein Leiterstück kann, wie im Fall der eben beschriebenen Hairpins, zwei länglich erstreckte Schenkel aufweisen. Ein Leiterstück kann aber auch nur einen länglich erstreckten Schenkel aufweisen. Solche sogenannten Sonderpins werden meist zusätzlich zu den Hairpins (Leiterstücke mit zwei Schenkeln) in den Statorkern eingesetzt. Solche Sonderpins (Leiterstücke mit einem Schenkel) weisen typischerweise eine länglich erstreckte Form auf.

Vorliegend ist mit "axial" bzw. "axiale Richtung" eine entlang der Mittellängsachse bzw. parallel zur Mittellängsachse des Stators (oder des Rotors) bzw. des Werkzeugs ausgerichtete Richtung gemeint. Mit anderen Worten, die Mittellängsachse der des Stators (oder des Rotors) bzw. des Werkzeugs ist in axialer Richtung orientiert. Entsprechend ist mit "radial" bzw. "radiale Richtung" eine senkrecht zur Mittellängsachse des Stators (oder des Rotors) bzw. des Werkzeugs ausgerichtete und von der Mittellängsachse der des Stators (oder des Rotors) bzw. des Werkzeugs ausgehende Richtung gemeint.

Mit einer "Relativbewegung" ist vorliegend gemeint, dass eine Bewegung zwischen zwei Elementen (bspw. zwischen dem Werkzeug und dem Werkzeughalter) relativ ist. D. h. es kann nur das erste Element (bspw. das Werkzeug) bewegt werden, wobei das zweite Element (bspw. der Werkzeughalter) nicht bewegt wird bzw. ortsfest ist. Es kann ebenso nur das zweite Element (bspw. der Werkzeughalter) bewegt werden, wobei das erste Element (bspw. das Werkzeug) nicht bewegt wird bzw. ortsfest ist. Selbstverständlich kann auch das erste Element (bspw. das Werkzeug) und das zweite Element (bspw. der Werkzeughalter) gleichzeitig bewegt werden.

Erfindungsgemäß weist das Werkzeug eine Arretierscheibe auf. Die Arretierscheibe ist ausgebildet, um das Werkzeug aus der Offenstellung in die Geschlossenstellung durch eine Relativdrehung zwischen der Arretierscheibe und dem Werkzeug zu überführen. Diese Relativdrehung wird durch eine Drehung der Arretierscheibe in eine erste Drehrichtung umgesetzt. Alternativ oder zusätzlich wird diese Relativdrehung durch eine Drehung des Werkzeugs in eine zweite Drehrichtung umgesetzt.

Das Werkzeug weist eine Befestigungsscheibe auf, mit der die Arretierscheibe im oder am Werkzeug befestigt wird. Dabei ist die Arretierscheibe zwischen der Befestigungsscheibe und dem Boden des Werkzeugs angeordnet.

Die Befestigungsscheibe ist mit dem Boden des Werkzeugs fest verbunden, wobei die Arretierscheibe zwischen der Befestigungsscheibe und dem Boden des Werkzeugs drehbar um die Rotationsachse des Werkzeugs gelagert ist.

Die Arretierscheibe ist ausgebildet, um das Werkzeug aus der Geschlossenstellung in die Offenstellung durch eine Relativbewegung zwischen der Arretierscheibe und dem Werkzeug zu überführen. Diese Relativdrehung wird durch eine Drehung der Arretierscheibe in die zweite Richtung umgesetzt. Alternativ oder zusätzlich wird diese Relativdrehung durch eine Drehung des Werkzeugs in die erste Drehrichtung umgesetzt.

Die erste Drehrichtung und die zweite Drehrichtung können zueinander entgegengesetzt orientiert sein. Die erste Drehrichtung kann im Uhrzeigersinn verlaufen. Die zweite Drehrichtung kann entgegen des Uhrzeigersinns verlaufen.

Die Arretierscheibe kann scheibenförmig ausgebildet sein. Die Arretierscheibe kann koaxial mit dem Werkzeug, in dem Werkzeug, angeordnet sein. Die Arretierscheibe kann um die Rotationsachse des Werkzeugs drehbar ausgebildet sein.

Mit einer "Relativdrehung" ist vorliegend gemeint, dass eine Drehung zwischen zwei Elementen (bspw. zwischen der Arretierscheibe und dem Werkzeug) relativ ist. D. h. es kann nur das erste Element (bspw. die Arretierscheibe) gedreht bzw. rotiert werden, wobei das zweite Element (bspw. das Werkzeug) nicht gedreht bzw. rotiert wird. Es kann ebenso nur das zweite Element (bspw. das Werkzeug) gedreht werden, wobei das erste Element (bspw. die Arretierscheibe) nicht gedreht bzw. rotiert wird. Selbstverständlich kann auch das erste Element (bspw. die Arretierscheibe) und das zweite Element (bspw. das Werkzeug) gleichzeitig gedreht bzw. rotiert werden.

Gemäß einer Weiterbildung kann die Arretierscheibe mittels einer Bajonettverbindung (bzw. mittels eines Bajonettverschlusses) mit dem Werkzeughalter verbindbar und/oder arretierbar ausgebildet sein. Mittels der Bajonettverbindung (bzw. des Bajonettverschlusses) kann eine formschlüssige Verbindung zwischen der Arretierscheibe (und damit dem Werkzeug) und dem Werkzeughalter entlang der axialen Richtung hergestellt werden. Hierzu kann der Werkzeughalter mehrere Fortsätze und die Arretierscheibe mehrere mit diesen Fortsätzen korrespondierende Ausnehmungen aufweisen. Alternativ oder zusätzlich kann die Arretierscheibe mehrere Fortsätze und der Werkzeughalter mehrere mit diesen Fortsätzen korrespondierende Ausnehmungen aufweisen.

Gemäß einer Weiterbildung kann die Arretierscheibe mittels radial bewegbarer Stifte mit dem Werkzeughalter verbindbar und/oder arretierbar ausgebildet sein. Mittels der radial bewegbarer Stifte, kann eine formschlüssige Verbindung zwischen der Arretierscheibe (und damit dem Werkzeug) und dem Werkzeughalter entlang der axialen Richtung hergestellt werden. Hierzu kann die Arretierscheibe (bzw. das Werkzeug) mehrere, radial bewegbare Stifte und der Werkzeughalter mehrere mit diesen Stiften korrespondierende Öffnungen aufweisen. Dabei können die Stifte durch eine radial einwärts gerichtete Bewegung in die Öffnungen bewegt bzw. eingeführt werden. Hierdurch kann die Arretierung der Arretierscheibe bzw. des Werkzeugs (Geschlossenstellung) umgesetzt werden. Diese Arretierung kann gelöst werden, in dem die Stifte durch eine radial auswärts gerichtete Bewegung aus den Öffnungen heraus bewegt werden (Offenstellung).

Gemäß einer Weiterbildung kann die Arretierscheibe einen Fortsatz mit einer Ausnehmung aufweisen. Der Fortsatz kann eine längliche, radial erstreckte, Form aufweisen. Die Ausnehmung kann an dem radial äußeren Ende des Fortsatzes angeordnet sein. Das Werkzeug kann mindestens eine Öffnung aufweisen. Die Öffnung kann in einer radialen bzw. einer entlang des Umfangs des Werkzeugs verlaufenden Wandung angeordnet sein. Die Öffnung kann länglich ausgebildet sein. Die Werkzeugwechseleinrichtung kann mindestens eine Betätigungseinheit aufweisen. Die Betätigungseinheit kann stiftförmig ausgebildet sein. Das radial einwärts gerichtete Ende der Betätigungseinheit kann komplementär zur Ausnehmung des Fortsatzes der Arretierscheibe ausgebildet sein.

Der Fortsatz, die Ausnehmung des Fortsatzes, die Öffnung des Werkzeugs und/oder die Betätigungseinheit der Werkzeugwechseleinrichtung können derart eingerichtet sein, dass die Betätigungseinheit durch die Öffnung in die Ausnehmung des Fortsatzes eingreifen kann. Mit anderen Worten, die Betätigungseinheit kann in der Ausnehmung des Fortsatzes aufgenommen werden. Hierdurch kann bei einer Relativdrehung zwischen der Betätigungseinheit (bzw. der Werkzeugwechseleinrichtung) und dem Werkzeug der Fortsatz in die erste Drehrichtung und/oder in die zweite Drehrichtung geschwenkt werden. Damit kann die Arretierscheibe in die erste Drehrichtung oder die zweite Drehrichtung gedreht werden.

Gemäß einer Weiterbildung kann die Werkzeugwechseleinrichtung mindestens eine Sensoreinrichtung aufweisen. Die Sensoreinrichtung kann eingerichtet sein, um, insbesondere optisch, zu detektieren, ob die Betätigungseinheit in die Ausnehmung des Fortsatzes eingreift oder nicht. Ebenso denkbar ist es, dass die Sensoreinrichtung zur induktiven, kapazitiven und/oder sensitiv Detektion eingerichtet sein kann. Die Sensoreinrichtung kann an dem radial äußeren Ende der Betätigungseinheit angeordnet sein.

Gemäß einer Weiterbildung kann die Werkzeugwechseleinrichtung mindestens einen Arm aufweisen. Die Betätigungseinheit (insbesondere alle Betätigungseinheiten) können entlang des Armes angeordnet sein. Der Arm kann radial bewegbar ausgebildet sein. Es kann ein Zentrierdorn in der Mitte des Werkzeugs vorgesehen sein. Der Zentrierdorn und der Arm können zusammen als eine Art Greifeinrichtung fungieren. Der Arm kann auf den Zentrierdorn zu- und von dem Zentrierdorn wegbewegbar ausgebildet sein.

Gemäß einer Weiterbildung kann die Werkzeugwechseleinrichtung einen ersten Arm und einen zweiten Arm, aufweisen. Die Betätigungseinheit (insbesondere alle Betätigungseinheiten) können entlang des ersten Armes angeordnet sein. Der erste Arm und der zweite Arm können ausgebildet sein, um in einer Relativbewegung aufeinander zu und/oder voneinander wegbewegt werden zu können. Die Werkzeugwechseleinrichtung kann in Form eines Greifers ausgebildet sein, wobei der erste bzw. der zweite Arm als erste bzw. zweite Greifbacke ausgebildet sein können.

Gemäß einer Weiterbildung kann der zweite Arm eine Arretiereinheit aufweisen. Die Arretiereinheit kann stiftartig, insbesondere bolzenartig bzw. als Bolzen, ausgebildet sein. Die Arretiereinheit kann entlang des zweiten Armes bewegbar ausgebildet sein. Die Arretiereinheit kann radial (entlang einer radialen Richtung) bewegbar ausgebildet sein. Die Arretiereinheit kann auf den ersten Arm zu und/oder von dem ersten Arm weg bewegbar ausgebildet sein.

Das Werkzeug kann mindestens eine Arretieröffnung aufweisen. Die Arretiereinheit kann in der radialen Wandung des Werkzeugs angeordnet sein. Die Arretiereinheit und die Arretieröffnung können derart ausgebildet sein, dass in der Offenstellung des Werkzeugs die Arretiereinheit in die Arretieröffnung einführbar, insbesondere durch die Arretieröffnung durchführbar (bzw. durchsteckbar), ist. Wenn die Vorrichtung mehrere Werkzeuge aufweist, so können die Arretieröffnungen der Werkzeuge fluchtend zueinander angeordnet sein, wenn die Werkzeuge in der Vorrichtung montiert (bzw. auf den Werkzeughaltern aufgenommen) sind.

Hierdurch kann insbesondere in Verbindung mit den Betätigungseinheiten eine sichere Arretierung des Werkzeugs (bzw. aller Werkzeuge) beim Verbinden bzw. Lösen des Werkzeugs (bzw. der Werkzeuge) gewährleistet werden. Andernfalls könnte das Werkzeug (bzw. die Werkzeuge) aus der Werkzeugwechseleinrichtung herausrutschen.

Gemäß einer Weiterbildung kann das Werkzeug, die Arretierscheibe und/oder der Werkzeughalter mindestens ein Poka Yoke Element aufweisen. Das Poka Yoke Element kann an bzw. in der Arretierscheibe angeordnet sein. Das Poka Yoke Element kann an bzw. in dem Werkzeughalter angeordnet sein. Das Poka Yoke Element kann als ein Fortsatz und/oder eine Ausnehmung ausgebildet sein. Durch das Poka Yoke Element kann gewährleistet werden, dass das Werkzeug nur in der vorgesehenen Orientierung bzw. Drehstellung mit dem Werkzeughalter verbunden werden kann. Bei einem Versuch das Werkzeug in einer falschen Orientierung bzw. Drehstellung mit dem Werkzeughalter zu verbinden, verhindert das Poka Yoke Element (bspw. ein Fortsatz, der bei richtiger Orientierung bzw. Drehstellung in eine Ausnehmung eingreift) das Verbinden des Werkzeugs mit dem Werkzeughalter (Schlüssel-Schloss-Prinzip).

Gemäß einer Weiterbildung kann die Arretierscheibe mindestens eine Arretierscheibenöffnung, insbesondere zwei Arretierscheibenöffnungen, aufweisen. Mittels der Arretierscheibenöffnung kann das Werkzeug manuell, mittels eines externen Hilfsmittels (bspw. eines externen Wechselwerkzeugs) von der Offenstellung in die Geschlossenstellung oder umgekehrt überführt werden. Damit kann ein Wechsel des Werkzeugs manuell, ohne die Werkzeugwechseleinrichtung, durchgeführt werden.

Gemäß einer Weiterbildung kann die Vorrichtung mehrere Werkzeuge umfassen. Die Werkzeuge können ineinander geschachtelt und zueinander koaxial angeordnet sein. Die Werkzeuge können jeweils unabhängig voneinander um eine gemeinsame Rotationsachse in die erste Drehrichtung oder die zweite Drehrichtung drehbar sein.

Ebenso denkbar ist es, dass die Werkzeuge gemeinsamen um die gemeinsame Rotationsachse in die erste Drehrichtung oder die zweite Drehrichtung drehbar sein können. Durch die Drehung der Werkzeuge um die gemeinsame Rotationsachse können die aus dem Stator herausragenden Schenkel der Leiterstücke verdreht werden.

Die obige Aufgabe wird weiter durch ein Verfahren zum Montieren und/oder Demontieren mindestens eines Werkzeugs einer Vorrichtung zum Verdrehen (Twisten) von Leiterstücken, die mindestens einen Schenkel aufweisen, die in einem Stator (oder einem Rotor) angeordnet sind und aus dem Stator (oder dem Rotor), insbesondere in eine axiale Richtung, herausragen, mit den Merkmalen des nebengeordneten Anspruchs gelöst.

Die Leiterstücke können als Hairpins ausgebildet sein. Die Leiterstücke können einen rechteckigen Leiterquerschnitt aufweisen.

Das Verfahren umfasst die Schritte:
Bereitstellen einer Vorrichtung gemäß obigen Ausführungen.

Wenn das Werkzeug sich in der Geschlossenstellung befindet, Überführen des Werkzeugs in die Offenstellung und mittels einer Werkzeugwechseleinrichtung umgesetzt werden.

Wenn das Werkzeug sich in der Offenstellung befindet, Verbinden des Werkzeugs mit dem Werkzeughalter (bzw. Einsetzen des Werkzeugs in den Werkzeughalter) oder Lösen des Werkzeugs von dem Werkzeughalter (bzw. Entfernen des Werkzeugs aus dem Werkzeughalter). Dies kann mittels der Werkzeugwechseleinrichtung, insbesondere durch eine Relativbewegung zwischen dem Werkzeug und dem Werkzeughalter, umgesetzt werden und durch die Relativbewegung zwischen dem Werkzeug und dem Werkzeughalter entlang einer axialen Richtung erfolgen.

Das Verfahren kann weiter den Schritt umfassen:
Wenn das Werkzeug mit dem Werkzeughalter verbunden ist und sich in der Offenstellung befindet, Arretieren des Werkzeugs auf dem Werkzeughalter, insbesondere mittels der Werkzeugwechseleinrichtung. Das Arretieren des Werkzeugs auf dem Werkzeughalter kann durch ein Überführen des Werkzeugs aus der Offenstellung in die Geschlossenstellung umgesetzt werden. Das Arretieren des Werkzeugs auf dem Werkzeughalter kann mittels einer Relativdrehung zwischen der Werkzeugwechseleinrichtung und dem Werkzeug umgesetzt werden. Die Relativdrehung kann durch eine Drehung der Werkzeugwechseleinrichtung in eine erste Drehrichtung realisiert werden. Durch die Arretierung kann ein unbeabsichtigtes Lösen (bzw. Entfernen) des Werkzeugs von dem Werkzeughalter verhindert werden.

Das Verfahren kann den Schritt umfassen:
Wenn das Werkzeug mit dem Werkzeughalter verbunden ist und auf dem Werkzeughalter arretiert ist, Lösen der Arretierung des Werkzeugs mit dem Werkzeughalter, insbesondere mittels der Werkzeugwechseleinrichtung. Das Lösen der Arretierung kann durch ein Überführen des Werkzeugs aus der Geschlossenstellung in die Offenstellung umgesetzt werden. Das Lösen der Arretierung kann mittels einer Relativdrehung zwischen der Werkzeugwechseleinrichtung und dem Werkzeug umgesetzt werden. Die Relativdrehung kann durch eine Drehung der Werkzeugwechseleinrichtung in eine zweite Drehrichtung realisiert werden. Durch das Lösen der Arretierung kann ein beabsichtigtes Lösen (bzw. Entfernen) des Werkzeugs von dem Werkzeughalter umgesetzt werden.

Die erste Drehrichtung und die zweite Drehrichtung können entgegengesetzt zueinander orientiert sein. Die erste Drehrichtung kann im Uhrzeigersinn verlaufen. Die zweite Drehrichtung kann entgegen des Uhrzeigersinns verlaufen.

Gemäß einer Weiterbildung des Verfahrens können, wenn die Vorrichtung mehrere Werkzeuge umfasst, alle Werkzeuge gleichzeitig von der Offenstellung in Geschlossenstellung, insbesondere mittels der Werkzeugwechseleinrichtung, überführt werden. Ebenso denkbar ist es, dass, wenn die Vorrichtung mehrere Werkzeuge umfasst, alle Werkzeuge gleichzeitig von der Geschlossenstellung in die Offenstellung, insbesondere mittels der Werkzeugwechseleinrichtung, überführt werden können.

Die Werkzeuge können alle gleichzeitig, insbesondere mittels der Werkzeugwechseleinrichtung, von den Werkzeughaltern gelöst werden. Die Werkzeuge können alle gleichzeitig, insbesondere mittels der Werkzeugwechseleinrichtung, mit den Werkzeughaltern verbunden werden.

Das Verfahren kann den Schritt umfassen:
Detektieren wie viele Werkzeuge in der Vorrichtung vorhanden sind und/oder ob die Werkzeuge ordnungsgemäß gegriffen werden. Dabei kann das Detektieren mittels mindestens einer Sensoreinrichtung umgesetzt werden.

Erfindungsgemäß wird zur Durchführung des Verfahrens eine Vorrichtung gemäß obigen Ausführungen verwendet. Hinsichtlich der damit erzielbaren Vorteile wird auf die diesbezüglichen Ausführungen zur Vorrichtung verwiesen. Zur weiteren Ausgestaltung des Verfahrens können die im Zusammenhang mit der Vorrichtung beschriebenen und/oder die nachfolgend noch erläuterten Maßnahmen dienen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Seitenansicht eines mit Leiterstücken bestückten Stators;
- Fig. 2: eine perspektivische Darstellung eines Werkzeugs;
- Fig. 3: eine Draufsicht des Werkzeugs gemäß Figur 2 in einer Offenstellung;
- Fig. 4: eine Draufsicht des Werkzeugs gemäß Figur 2 in einer Geschlossenstellung;
- Fig. 5: eine perspektivische Darstellung einer Werkzeugwechseleinrichtung;
- Fig. 6: einen Ausschnitt einer Schnittansicht der Werkzeugwechseleinrichtung aus Figur 5;
- Fig. 7: eine perspektivische Darstellung einer Vorrichtung mit mehreren Werkzeugen aus einer ersten Perspektive; und
- Fig. 8: eine perspektivische Darstellung der Vorrichtung aus Figur 7 aus einer zweiten Perspektive.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

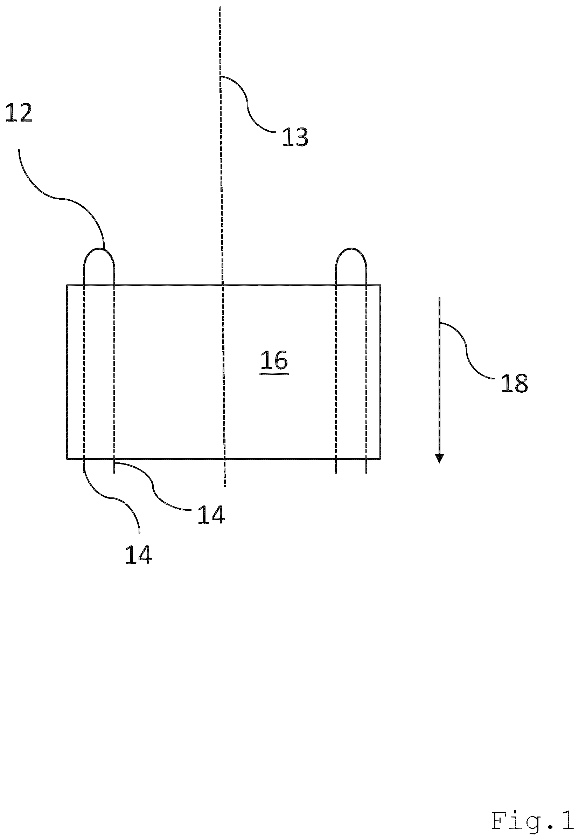

Figur 1 zeigt eine schematische Seitenansicht eines mit Leiterstücken 12 bestückten Stators 16. Bei den dargestellten Leiterstücken 12 handelt es sich um Leiterstücke 12 mit zwei Schenkeln 14 (Hairpins). Die Leiterstücke 12 sind kreisförmig um die Mittellängsachse 13 des Stators 16 angeordnet. Der besseren Übersicht halber sind lediglich zwei Leiterstücke 12 dargestellt. Die Schenkel 14 der Leiterstücke 12 ragen aus dem Stator 16 entlang einer axialen Richtung 18 aus dem Stator 16 heraus (in Figur 1 nach unten).

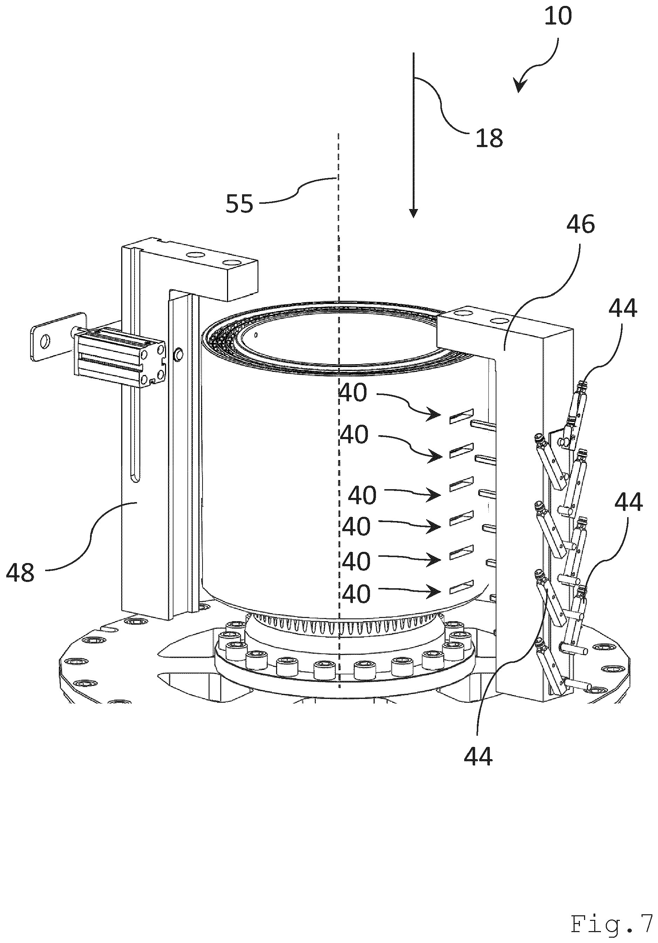

Die aus dem Stator 16 herausragenden Schenkel 14 der Leiterstück 12 können mit einer Vorrichtung 10 (vgl. Figur 7) um die Mittellängsachse 13 des Stators 16 verdreht werden.

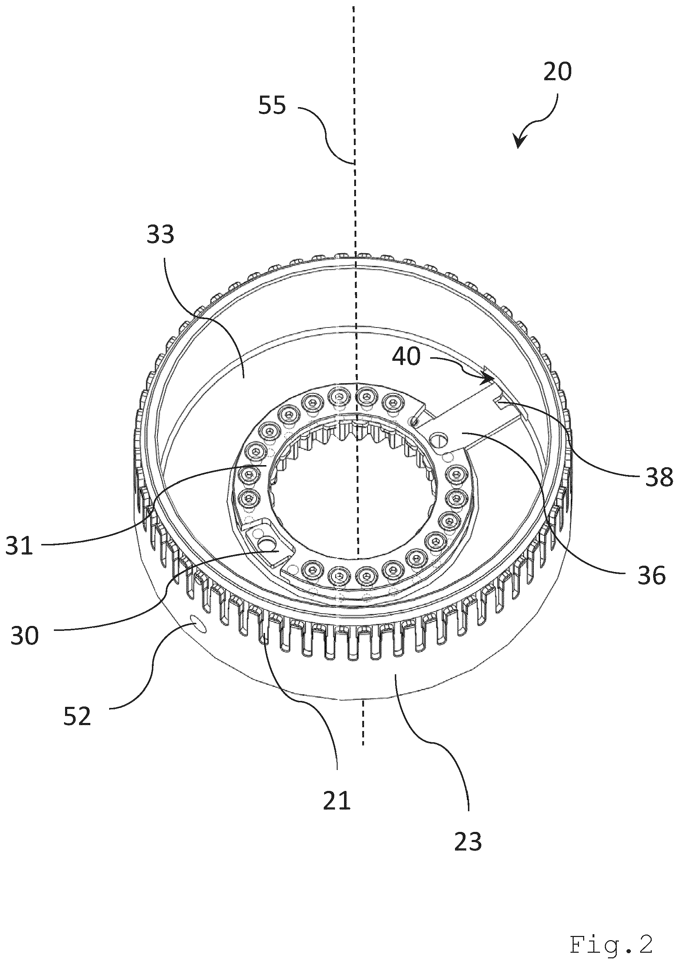

Figur 2 zeigt eine perspektivische Darstellung eines Werkzeugs 20 der Vorrichtung 10. Das Werkzeug 20 ist kreiszylinderförmig ausgebildet. Das Werkzeug 20 weist einen Boden 33 und eine radiale Wandung 23 auf, die den Boden 33 umgibt. Das Werkzeug 20 weist eine Vielzahl an Aufnahmen 21 auf, die in Umfangsrichtung entlang der radialen Wandung 23 des Werkzeugs 20 angeordnet sind.

Jede der Aufnahmen 21 ist ausgebildet, um mindestens einen Schenkel 14 (bzw. dessen aus dem Stator 16 herausragendes Ende) der Leiterstücke 12 aufzunehmen. Sobald die Schenkel 14 der Leiterstück 12 in den Aufnahmen 21 des Werkzeugs 20 aufgenommen sind, kann durch ein Drehen des Werkzeugs 20 um eine Rotationsachse 55 (bzw. um die Mittellängsachse 13 des Stators 16) alle in den Aufnahmen 21 des Werkzeugs 20 aufgenommenen Schenkeln 14 gleichzeitig verdreht werden. Während des Verdrehvorgangs ist der Stator 16 und das Werkzeug 20 koaxial zueinander angeordnet.

Das Werkzeug 20 weist eine Arretierscheibe 30 auf. Die Arretierscheibe 30 ist im Werkzeug 20 drehbar um die Rotationsachse 55 angeordnet. Die Arretierscheibe 30 wird mittels einer Befestigungsscheibe 31 im Werkzeug 20 befestigt. Dazu wird die Arretierscheibe 30 zwischen dem Boden 33 und der Befestigungsscheibe 31 angeordnet, wobei die Befestigungsscheibe 31 mit dem Boden 33 des Werkzeugs 20 bspw. mittels Schrauben fest (drehfest) verbunden wird. Damit wird die Arretierscheibe 30 formschlüssig, jedoch um die Rotationsachse 55 drehbar, zwischen der Befestigungsscheibe 31 und dem Boden 33 des Werkzeugs 20 gehalten.

Mithilfe der Arretierscheibe 30 kann das Werkzeug 20 von einer Offenstellung 24 in eine Geschlossenstellung 26, oder umgekehrt, überführt werden.

Das Werkzeug 20 weist zudem eine Arretieröffnung 52 auf, auf die im Detail weiter unten eingegangen wird.

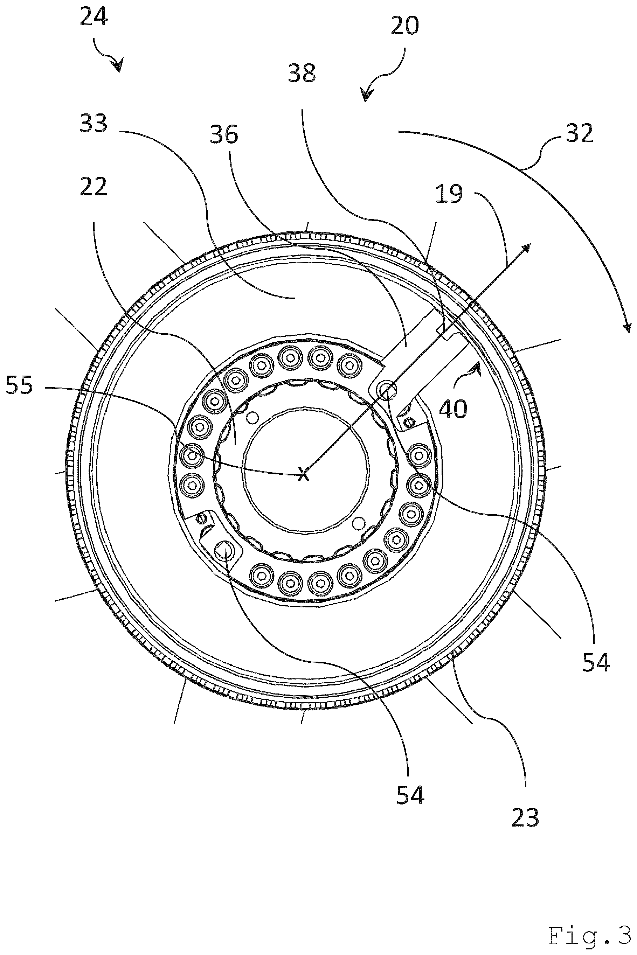

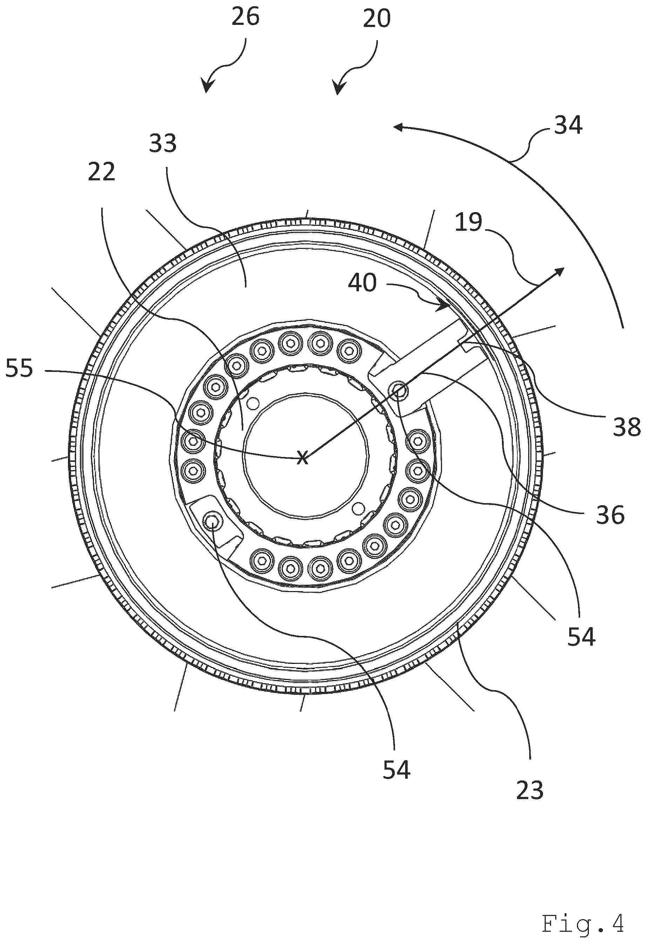

Figur 3 zeigt eine Draufsicht des Werkzeugs 20 gemäß Figur 2 in der Offenstellung 24 und Figur 4 zeigt eine Draufsicht des Werkzeugs 20 gemäß Figur 2 in der Geschlossenstellung 26.

Die Vorrichtung 10 weist mindestens einen Werkzeughalter 22 zum Aufnehmen des Werkzeugs 20 auf. Der Werkzeughalter 22 weist hierzu eine Außenverzahnung und das Werkzeug 20 eine mit der Außenverzahnung des Werkzeughalters 22 korrespondierende Innenverzahnung. Damit kann durch ein einfaches Einsetzen des Werkzeugs 20 auf den Werkzeughalter 22 eine drehfeste (in Bezug auf die Rotationsachse 55) Verbindung zwischen dem Werkzeug und dem Werkzeughalter 22 umgesetzt werden.

In der Offenstellung 24 kann das Werkzeug 20 mit dem Werkzeughalter 22 verbunden oder von den Werkzeughalter 22 gelöst werden. Mit anderen Worten, das Werkzeug 20 kann auf den Werkzeughalter 22 aufgesetzt oder von dem Werkzeughalter 22 entfernt werden.

In der Geschlossenstellung 26 kann das Werkzeug 20 mit dem Werkzeughalter 22 nicht verbunden oder nicht von dem Werkzeughalter 22 gelöst werden. In der Geschlossenstellung 26 kann das Werkzeug 20, wenn das Werkzeug 20 mit dem Werkzeughalter 22 verbunden ist, arretiert werden.

Das Werkzeug 20 kann aus der Offenstellung 24 durch ein Drehen der Arretierscheibe 30 um die Rotationsachse 55 in eine erste Drehrichtung 32 (vgl. Figur 3) in die Geschlossenstellung 26 überführt werden.

Das Werkzeug 20 kann aus der Geschlossenstellung 26 durch ein Drehen der Arretierscheibe 30 um die Rotationsachse 55 in eine zweite Drehrichtung 34 (vgl. Figur 4) in die Offenstellung 24 überführt werden. Vorliegend sind die erste Drehrichtung 32 im Uhrzeigersinn und die zweite Drehrichtung 34 entgegen des Uhrzeigersinns orientiert.

Zwischen der Arretierscheibe 30 und dem Werkzeughalter 22 kann eine formschlüssige Verbindung hergestellt werden. Hierzu weist die Arretierscheibe 30 Fortsätze und Ausnehmungen auf (ähnlich einer Innenverzahnung eines Zahnrades). Der Werkzeughalter 22 weist ebenfalls Fortsätze und Ausnehmungen auf, die mit den Fortsätzen und Ausnehmungen der Arretierscheibe 30 korrespondieren.

Die Fortsätze und Ausnehmungen der Arretierscheibe 30 bzw. des Werkzeughalters 22 funktionieren ähnlich eines Bajonettverschlusses. Durch ein Verdrehen der Arretierscheibe 30 kann so (wenn das Werkzeug 20 mit der Werkzeughalter 22 verbunden ist) eine formschlüssige Verbindung entlang der axialen Richtung 18 zwischen der Arretierscheibe 30 (und damit dem Werkzeug 20) und dem Werkzeughalter 22 hergestellt werden.

Die Arretierscheibe 30 kann mittels eines externen Hilfsmittels, bspw. eines externen Wechselwerkzeugs, manuell gedreht werden. Die Arretierscheibe 30 weist hierzu zwei Arretierscheibenöffnungen 54 auf. Das externe Wechselwerkzeug (nicht dargestellt) kann in die beiden Arretierscheibenöffnungen 54 eingreifen und so eine mechanische, drehfeste Verbindung mit der Arretierscheibe 30 eingehen. Durch ein Drehen des externen Wechselwerkzeugs um die Rotationsachse 55 kann die Arretierscheibe 30 ebenfalls um die Rotationsachse 55 gedreht werden und damit das Werkzeug 20 aus der Offenstellung 24 in die Geschlossenstellung 26, oder umgekehrt, überführt werden.

Zum Überführen des Werkzeugs 20 von der Offenstellung 24 in die Geschlossenstellung 26, oder umgekehrt, und um das Werkzeug 20 von Werkzeughalter 22 zu lösen oder mit dem Werkzeughalter 22 zu verbinden weist die Vorrichtung 10 eine Werkzeugwechseleinrichtung 28 auf.

Zum Drehen der Arretierscheibe 30 mittels der Werkzeugwechseleinrichtung 28 weist die Arretierscheibe 30 einen Fortsatz 36 auf. Der Fortsatz 36 erstreckt sich entlang einer radialen Richtung 19. Der Fortsatz 36 weist an seinem radial äußeren Ende eine Ausnehmung 38 auf. Das Werkzeug 20 weist vorliegend eine längliche Öffnung 40 auf, die in der radialen Wandung 23 angeordnet ist.

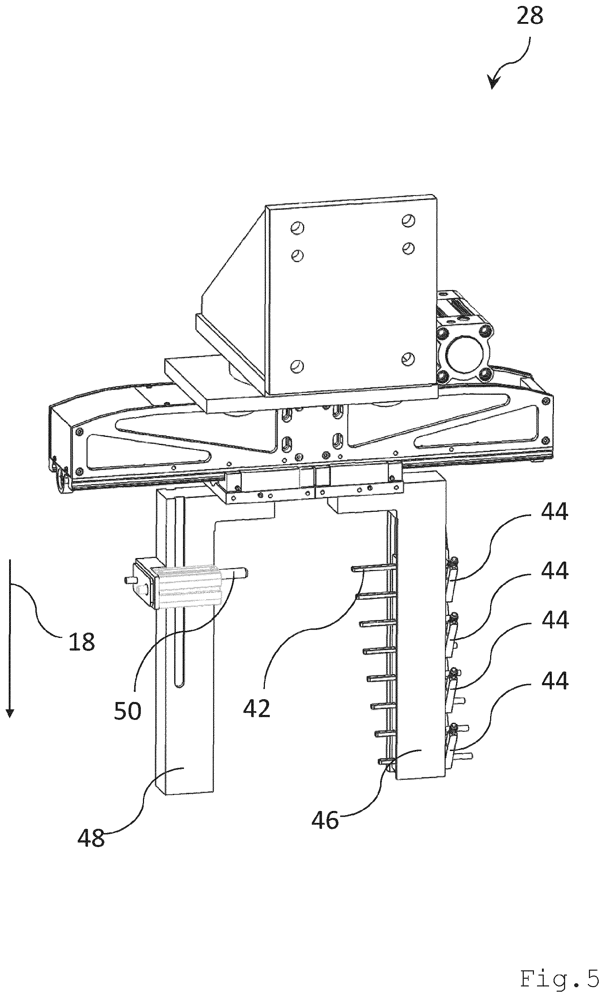

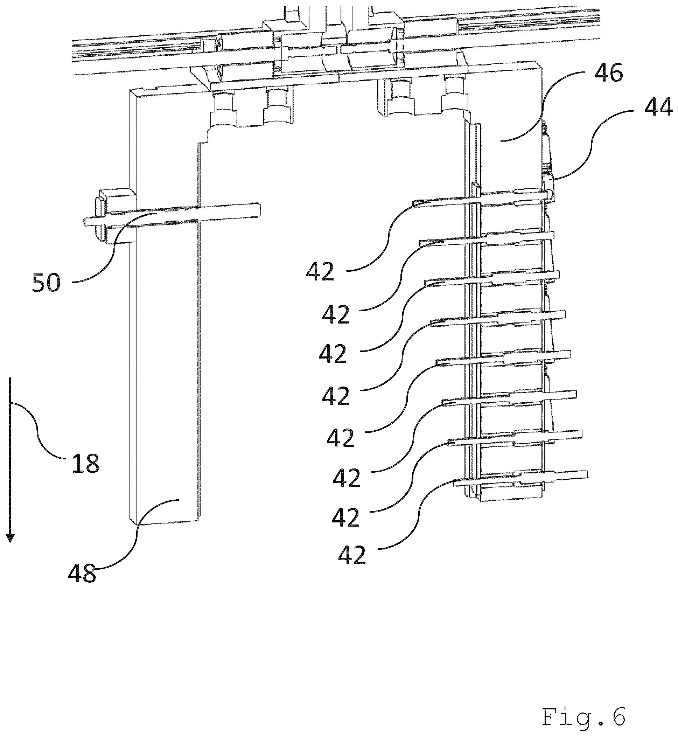

Die Werkzeugwechseleinrichtung 28 weist vorliegend acht Betätigungseinheiten 42 (vgl. Figur 5 und 6) auf. Dabei kann eine der Betätigungseinheiten 42 durch die Öffnung 40 von radial außen nach radial einwärts bewegt werden und in die Ausnehmung 38 des Fortsatzes 36 eingreifen. Durch ein Drehen bzw. schwenken der Betätigungseinheit 42 um die Rotationsachse 55 kann der Fortsatz 36 um die Rotationsachse 55 gedreht bzw. geschwenkt werden. Hierdurch kann die Arretierscheibe 30 um die Rotationsachse 55 gedreht werden.

Figur 5 zeigt eine perspektivische Darstellung der Werkzeugwechseleinrichtung 28. Figur 6 zeigt einen Ausschnitt einer Schnittansicht der Werkzeugwechseleinrichtung 28 aus Figur 5.

Die Werkzeugwechseleinrichtung 28 weist einen ersten Arm 46 und einen zweiten Arm 48 auf. Die beiden Arme 46, 48 sind aufeinander zu und voneinander weg bewegbar ausgebildet.

Die Werkzeugwechseleinrichtung 28 ist ähnlich eines Greifers ausgebildet.

Die Werkzeugwechseleinrichtung 28 weist vorliegend acht Betätigungseinheiten 42 auf. Die Betätigungseinheiten 42 sind in im ersten Arm 46 und entlang des ersten Armes 46 angeordnet. Die Betätigungseinheiten 42 sind stiftartig ausgebildet und jeweils mittels einer Feder (nicht dargestellt) radial einwärts (in Richtung der Rotationsachse 55) vorgespannt. Die Betätigungseinheiten 42 sind jeweils auf den zweiten Arm 48 zu bzw. von dem zweiten Arm 48 weg bewegbar (also radial bewegbar) ausgebildet.

Die Werkzeugwechseleinrichtung 28 weist eine Arretiereinheit 50 auf. Die Arretiereinheit 50 ist entlang des zweiten Armes 48 und auf den ersten Arm 46 zu oder von dem ersten Arm 46 weg bewegbar (also radial bewegbar) ausgebildet. Die Arretiereinheit 50 kann durch die Arretieröffnung 52 des Werkzeugs 20 hindurchgesteckt werden. Dies kann durch ein Bewegen des zweiten Armes 48 oder durch ein Bewegen der Arretiereinheit 50 in Richtung des ersten Armes 46 (also radial einwärts) umgesetzt werden.

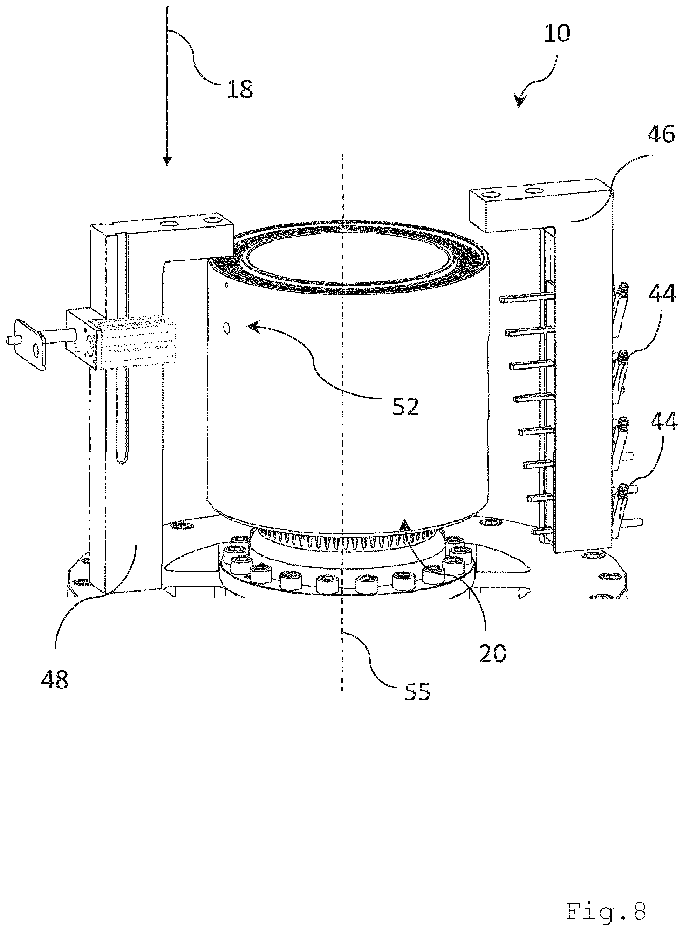

Figuren 7 und 8 zeigen eine perspektivische Darstellung der Vorrichtung 10 mit mehreren Werkzeugen 20 aus zwei verschiedenen Perspektiven.

Vorliegend weist die Vorrichtung 10 sechs Werkzeuge 20 auf (vgl. Fig. 7). Jedes der sechs Werkzeuge 20 ist auf einem Werkzeughalter 22 angeordnet (vgl. Fig. 3 oder 4). Damit weist die Vorrichtung 10 vorliegend sechs Werkzeughalter 22 auf. Die Werkzeuge 20, sowie die jeweiligen Werkzeughalter 22, sind ineinander verschachtelt angeordnet. Hierzu unterscheiden sich die Werkzeuge 20, sowie die jeweiligen Werkzeughalter 22, jeweils in ihrer Größe und insbesondere Umfang bzw. Durchmesser. So nimmt der Umfang bzw. der Durchmesser der Werkzeuge 20, sowie der jeweiligen Werkzeughalter 22 nach radial einwärts ab.

Das innerste Werkzeug 20 weist eine Öffnung 40 auf. Das innerste Werkzeug 20 entspricht dem in Figur 2 gezeigten Werkzeug 20. Das nach radial auswärts zweite Werkzeug 20 weist zwei Öffnungen 40 auf. Das nach radial auswärts dritte Werkzeug 20 weist drei Öffnungen 40 auf. Das nach radial auswärts vierte Werkzeug 20 weist vier Öffnungen 40 auf. Das nach radial auswärts fünfte Werkzeug 20 weist fünf Öffnungen 40 auf. Das nach radial auswärts sechste Werkzeug 20 weist sechs Öffnungen 40 auf.

Die Werkzeuge 20 können zeitgleich mittels der Werkzeugwechseleinrichtung 28 aus der Offenstellung 24 in die Geschlossenstellung 26, oder umgekehrt, überführt werden. Die Werkzeuge 20 können zeitgleich mittels der Werkzeugwechseleinrichtung 28 von den Werkzeughaltern 22 gelöst oder mit den Werkzeughaltern 22 verbunden werden. Die Werkzeuge 20 können um eine gemeinsame Rotationsachse 55 mittels der Werkzeughalter 22 gedreht werden.

Zum Überführen der Werkzeuge 20 aus der Offenstellung 24 in die Geschlossenstellung 26, oder umgekehrt, wird die Werkzeugwechseleinrichtung 28 zunächst derart positioniert, dass die Betätigungseinheiten 42 der Werkzeugwechseleinrichtung 28 in die Öffnungen 40 eingeführt werden können. Eine derartige Position ist in den Figuren 7 und 8 gezeigt.

Die Betätigungseinheiten 42 der Werkzeugwechseleinrichtung 28 werden durch die Öffnungen 40 in die Werkzeuge 20 eingeführt, sodass die Betätigungseinheiten 42 in die jeweiligen Ausnehmungen 38 der Arretierscheiben 30 der jeweiligen Werkzeuge 20 eingreifen können. Zum Einführen der Betätigungseinheiten 42 in die Öffnungen 40 wird der erste Arm 46 radial einwärts, zur Rotationsachse 55 hin, bewegt.

Die Werkzeugwechseleinrichtung 28 weist vorliegend acht Sensoreinrichtungen 44 auf. Jede Sensoreinrichtung 44 ist an einem radial äußeren Ende einer Betätigungseinheit 42 angeordnet. Die Sensoreinrichtungen 44 sind ausgebildet, um zu detektieren, ob die jeweilige Betätigungseinheit 42 in die Ausnehmung 38 des Fortsatzes 36 eingreift oder nicht.

Wie bereits oben erwähnt, sind die Betätigungseinheiten 42 radial einwärts mittels einer Feder vorgespannt. Wenn die Betätigungseinheiten 42 radial einwärts bewegt werden (in dem der erste Arm 46 radial einwärts bewegt wird) und wenn die Betätigungseinheiten 42 auf die Ausnehmungen 38 der Fortsätze 36 treffen, wird die jeweilige Betätigungseinheit 42 (bei weiterer radial einwärts gerichteter Bewegung des ersten Armes 46) mittels des Fortsatzes 36 gegen die jeweilige Vorspannung gedrückt. Hierdurch resultiert eine relative Bewegung der jeweiligen Betätigungseinheit 42 in Bezug zum ersten Arm 46 nach radial außen. Mit anderen Worten, die jeweilige Betätigungseinheit 42 wird nach radial auswärts aus dem ersten Arm 46 herausgedrückt. Ein solches Herausdrücken kann mittels der Sensoreinrichtungen 44, bspw. optisch, detektiert werden.

Fehlt ein mit einer Betätigungseinheit 42 korrespondierendes Werkzeug 20 (bzw. die darin angeordnete Arretierscheibe 30), so unterbleibt das Herausdrücken der Betätigungseinheit 42 aus dem ersten Arm 46 nach radial auswärts. Dies ist bspw. für die beiden in Figur 7 untersten Betätigungseinheiten 42 der Werkzeugwechseleinrichtung 28 der Fall (vgl. Figur 7). Dies kann mittels der Sensoreinrichtungen 44, bspw. optisch, detektiert werden. Auf diese Weise kann festgestellt werden, wie viele Werkzeuge 20 in der Vorrichtung 10 vorhanden sind. Alternativ oder zusätzlich kann auf diese Weise festgestellt werden, ob die Betätigungseinheiten 42 in die Ausnehmungen 38 ordnungsgemäß eingesetzt sind. So kann mittels der Sensoreinrichtungen 44 festgestellt werden, dass die in Figuren 7 und 8 gezeigte Vorrichtung 10 sechs Werkzeuge 20 umfasst.

Der besseren Übersicht halber ist in den Figuren 7 und 8 die Werkzeugwechseleinrichtung 28 teilweise dargestellt (es sind nur die beiden Arme 46, 48 mit den auf diesen Armen 46, 48 angeordneten Elementen dargestellt).

Im Folgenden wird eine Demontage der sechs Werkzeuge 20 der Vorrichtung 10 mittels der Werkzeugwechseleinrichtung 28 beschrieben.

Die Werkzeugwechseleinrichtung 28 wird zunächst in die in den Figuren 7, 8 gezeigte Stellung bewegt. Die Werkzeuge 20 befinden sich in der Geschlossenstellung 26. Die Werkzeuge 20 sind also an den jeweiligen Werkzeughaltern 22 arretiert.

Als nächstes werden die beiden Arme 46, 48 der Werkzeugwechseleinrichtung 28 aufeinander zubewegt, sodass die Betätigungseinheiten 42 durch die Öffnungen 40 in die Ausnehmungen 38 der jeweiligen Arretierscheiben 30 eingreifen.

Anschließend wird die Werkzeugwechseleinrichtung 28 um die Rotationsachse 55 in die zweite Drehrichtung 34 (vgl. Figur 4) gedreht. Damit werden alle sechs Werkzeuge 20 gleichzeitig aus der Geschlossenstellung 26 in die Offenstellung 24 überführt.

Wenn die Werkzeuge 20 sich in der Offenstellung 24 befinden und mit den jeweiligen Werkzeughaltern 22 verbunden sind kann die Arretiereinheit 50 von radial außen nach radial einwärts durch die Arretieröffnungen 52 der Werkzeuge 20 bewegt werden. Hierzu sind die Arretieröffnungen 52 derart angeordnet, dass sie fluchtend zueinander angeordnet sind, wenn die Werkzeuge 20 auf den Werkzeughaltern 22 aufgenommen sind (bzw. wenn die Werkzeuge 20 in der Vorrichtung montiert sind).

Anschließend können alle Werkzeuge 20 gleichzeitig von den Werkzeughaltern 22 gelöst werden, indem die Werkzeuge 20 mittels der Werkzeugwechseleinrichtung 28 entlang der Rotationsachse 55, in Figur 7 nach oben, bewegt werden. Die Werkzeuge 20 können an einem anderen Ort abgelegt (bspw. in einem Werkzeugmagazin) und andere Werkzeuge 20 können mit der Werkzeugwechseleinrichtung 28 aufgenommen werden.

Die in der Werkzeugwechseleinrichtung 28 neu aufgenommenen Werkzeuge 20 können wieder in der Vorrichtung 10 montiert werden, also wieder mit den jeweiligen Werkzeughalter 22 verbunden und arretiert werden.

Hierzu werden die neu aufgenommenen Werkzeuge 20 in der Offenstellung 24 mittels der Werkzeugwechseleinrichtung 28 mit den Werkzeughalter 22 verbunden (bzw. in die Werkzeughalter 22 eingesetzt).

Die Arretiereinheit 50 wird nach radial auswärts bewegt, sodass eine Drehung der Werkzeugwechseleinrichtung 28 um die Rotationsachse 55 ermöglicht wird. Anschließend werden die Werkzeuge 20 arretiert, in dem die Werkzeuge 20 aus der Offenstellung 24 in die Geschlossenstellung 26 mittels einer Drehung der Werkzeugwechseleinrichtung 28 um die Rotationsachse 55 in die erste Drehrichtung 32 überführt werden.

Danach kann der erste Arm 46, und damit die Betätigungseinheiten 42, nach radial auswärts bewegt werden. Sobald die Werkzeugwechseleinrichtung 28 die Werkzeuge 20 nicht mehr kontaktiert kann diese wegbewegt werden.

## Patentansprüche

1. Vorrichtung (10) zum Verdrehen von Leiterstücken (12), die mindestens einen Schenkel (14) aufweisen, die in einem Stator (16) angeordnet sind und aus dem Stator (16), herausragen, wobei die Vorrichtung (10) umfasst:
- mindestens ein zylinderförmiges Werkzeug (20) zum Verdrehen der aus dem Stator (16) herausragenden Schenkel (14) der Leiterstücke (12), das Werkzeug (20) weist eine Vielzahl an Aufnahmen (21) auf, die in Umfangsrichtung entlang einer radialen Wandung (23) des Werkzeugs (20) angeordnet sind
- mindestens einen Werkzeughalter (22) zum Aufnehmen des Werkzeugs (20), der Werkzeughalter (22) umfasst eine Außenverzahnung und das Werkzeug (20) eine mit der Außenverzahnung des Werkzeughalters (22) korrespondierende Innenverzahnung
- wobei das Werkzeug (20) von einer Offenstellung (24), in der das Werkzeug (20) mit dem Werkzeughalter (22) verbunden oder von dem Werkzeughalter (22) gelöst werden kann, in eine Geschlossenstellung (26), in der das Werkzeug (20), wenn das Werkzeug (20) mit dem Werkzeughalter (22) verbunden ist, arretiert werden kann, überführbar ist und umgekehrt,
- eine Werkzeugwechseleinrichtung (28), die ausgebildet ist, um das Werkzeug (20) von der Offenstellung (24) in die Geschlossenstellung (26), oder umgekehrt, zu überführen,
- wobei die Werkzeugwechseleinrichtung (28) ausgebildet ist, um das Werkzeug (20) von dem Werkzeughalter (22) zu lösen oder mit dem Werkzeughalter (22) zu verbinden, wobei das Werkzeug (20) eine Arretierscheibe (30) aufweist, die Arretierscheibe (30) wird mittels einer Befestigungsscheibe (31) im Werkzeug (20) befestigt und zwischen einem Boden (33) und der Befestigungsscheibe (31) und drehbar um die Rotationsachse (55)angeordnet, wobei die Arretierscheibe (30) ausgebildet ist, um das Werkzeug (20) aus der Offenstellung (24), sodass das Werkzeug (20) auf den Werkzeughalter (22)aufgesetzt oder von dem Werkzeughalter (22) entfernt werden kann, in die Geschlossenstellung (26), sodass das Werkzeug (20), wenn das Werkzeug (20) mit dem Werkzeughalter (22) verbunden ist, arretiert werden kann,
durch eine Relativdrehung zwischen der Arretierscheibe (30) und dem Werkzeug (20), durch eine Drehung der Arretierscheibe (30) in eine erste Drehrichtung (32) und/oder eine Drehung des Werkzeugs (20) in eine zweite Drehrichtung (34), zu überführen, und wobei die Arretierscheibe (30) weiter ausgebildet ist, um das Werkzeug (20) aus der Geschlossenstellung (26) in die Offenstellung (24) durch eine Relativdrehung zwischen der Arretierscheibe (30) und dem Werkzeug (20), durch eine Drehung der Arretierscheibe (30) in die zweite Drehrichtung (34) und/oder eine Drehung des Werkzeugs (20) in die erste Drehrichtung (32), zu überführen.

2. Vorrichtung (10) nach Anspruch 1, **dadurch gekennzeichnet, dass** die Arretierscheibe (30) mittels einer Bajonettverbindung mit dem Werkzeughalter (22) verbindbar ausgebildet ist, um eine formschlüssige Verbindung zwischen dem Werkzeug (20) und dem Werkzeughalter (22) entlang der axialen Richtung (18) herzustellen.

3. Vorrichtung (10) nach Anspruch 1 oder 2, **dadurch gekennzeichnet, dass** die Arretierscheibe (30) mittels radial bewegbarer Stifte mit dem Werkzeughalter (22) verbindbar ausgebildet ist, um eine formschlüssige Verbindung zwischen dem Werkzeug (20) und dem Werkzeughalter (22) entlang der axialen Richtung (18) herzustellen.

4. Vorrichtung (10) nach einem der voranstehenden Ansprüche, **dadurch gekennzeichnet, dass** die Arretierscheibe (30) einen Fortsatz (36) mit einer Ausnehmung (38), das Werkzeug (20) mindestens eine Öffnung (40) und die Werkzeugwechseleinrichtung (28) mindestens eine Betätigungseinheit (42) aufweisen, wobei der Fortsatz (36), die Ausnehmung (38), die Öffnung (40) und/oder die Betätigungseinheit (42) derart eingerichtet sind, dass die Betätigungseinheit (42) durch die Öffnung (40) in die Ausnehmung (38) des Fortsatzes (36) eingreifen kann, um mittels einer Relativdrehung zwischen der Betätigungseinheit (42), insbesondere der Werkzeugwechseleinrichtung (28), und dem Werkzeug, den Fortsatz (36) in die erste Drehrichtung (32) oder in die zweite Drehrichtung (34) zu schwenken und damit die Arretierscheibe (30) in die erste Drehrichtung (32) oder die zweite Drehrichtung (34) zu drehen.

5. Vorrichtung (10) nach Anspruch 4, **dadurch gekennzeichnet, dass** die Werkzeugwechseleinrichtung (28) mindestens eine Sensoreinrichtung (44) aufweist, wobei die Sensoreinrichtung (44) eingerichtet ist, um zu detektieren, ob die Betätigungseinheit (42) in die Ausnehmung (38) des Fortsatzes (36) eingreift.

6. Vorrichtung (10) nach Anspruch 4 oder 5, **dadurch gekennzeichnet, dass** die Werkzeugwechseleinrichtung (28) mindestens einen Arm aufweist, wobei die Betätigungseinheit (42) entlang des Armes angeordnet sind, wobei der Arm radial bewegbar ausgebildet ist.

7. Vorrichtung (10) nach einem der Ansprüche 4 bis 6, **dadurch gekennzeichnet, dass** die Werkzeugwechseleinrichtung (28) einen ersten Arm (46) und einen zweiten Arm (48) aufweist, wobei die Betätigungseinheit (42) entlang des ersten Armes (46) angeordnet ist, wobei der erste Arm (22) und der zweite Arm (48) ausgebildet sind, um in einer Relativbewegung aufeinander zu oder voneinander weg bewegt werden zu können.

8. Vorrichtung (10) nach Anspruch 7, **dadurch gekennzeichnet, dass** der zweite Arm (46) eine Arretiereinheit (50) aufweist, die auf den ersten Arm (46) zu und/oder von dem ersten Arm (46) weg bewegbar ausgebildet ist, wobei das Werkzeug (20) mindestens eine Arretieröffnung (52) aufweist, wobei die Arretiereinheit (50) und die Arretieröffnung (52) derart ausgebildet sind, dass in der Offenstellung (26) des Werkzeugs (20) die Arretiereinheit (50) in die Arretieröffnung (52) einführbar ist.

9. Vorrichtung (10) nach einem der voranstehenden Ansprüche, **dadurch gekennzeichnet, dass** das Werkzeug (20), die Arretierscheibe (30) und/oder der Werkzeughalter (22) mindestens ein Poka Yoke Element aufweist.

10. Vorrichtung (10) nach einem der voranstehenden Ansprüche, **dadurch gekennzeichnet, dass** die Arretierscheibe (30) mindestens eine Arretierscheibenöffnung (54) aufweist, um das Werkzeug (20) manuell, mittels eines externen Hilfsmittels, von der Offenstellung (24) in die Geschlossenstellung (26), oder umgekehrt, zu überführen.

11. Vorrichtung (10) nach einem der voranstehenden Ansprüche, **dadurch gekennzeichnet, dass** die Vorrichtung (10) mehrere Werkzeuge (20) umfasst, die ineinander geschachtelt angeordnet sind, wobei die Werkzeuge (20) jeweils unabhängig voneinander oder gemeinsam um eine gemeinsame Rotationsachse (55), die entlang der axialen Richtung (18) orientiert ist, in die erste Drehrichtung (32) oder die zweite Drehrichtung (34) drehbar sind, um die aus dem Stator (16) herausragenden Schenkel (14) der Leiterstücke (12) zu verdrehen.

12. Verfahren zum Montieren und/oder Demontieren mindestens eines Werkzeugs (20) einer Vorrichtung (10) zum Verdrehen von Leiterstücken (12), die mindestens einen Schenkel (14) aufweisen, die in einem Stator (16) angeordnet sind und aus dem Stator (16) herausragen, wobei das Verfahren die Schritte umfasst:
- Bereitstellen einer Vorrichtung (10) nach einem der voranstehenden Ansprüche;
- Wenn das Werkzeug (20) sich in der Geschlossenstellung (26) befindet, Überführen des Werkzeugs (20) in die Offenstellung (24) mittels einer Werkzeugwechseleinrichtung (28),
- Wenn das Werkzeug (20) sich in der Offenstellung (24) befindet, Verbinden des Werkzeugs (20) mit dem Werkzeughalter (22) oder Lösen des Werkzeugs (20) von dem Werkzeughalter (22) mittels der Werkzeugwechseleinrichtung (28) durch eine Relativbewegung zwischen dem Werkzeug (20) und dem Werkzeughalter (22) entlang einer axialen Richtung (18).

13. Verfahren nach Anspruch 12, **dadurch gekennzeichnet, dass** das Verfahren den Schritt umfasst:
- Wenn das Werkzeug (20) mit dem Werkzeughalter (22) verbunden ist und sich in der Offenstellung (24) befindet, Arretieren des Werkzeugs (20) auf dem Werkzeughalter (22) mittels der Werkzeugwechseleinrichtung (28) mittels einer Relativdrehung zwischen der Werkzeugwechseleinrichtung (28) und dem Werkzeug (20)wobei die Werkzeugwechseleinrichtung (28) in eine erste Drehrichtung (32) gedreht wird, um ein unbeabsichtigtes Lösen des Werkzeugs (20) von dem Werkzeughalter (22) zu verhindern.

14. Verfahren nach Anspruch 13, **dadurch gekennzeichnet, dass** das Verfahren den Schritt umfasst,
- Wenn das Werkzeug (20) mit dem Werkzeughalter (22) verbunden ist und auf dem Werkzeughalter (22) arretiert ist, Lösen der Arretierung des Werkzeugs (20) mit dem Werkzeughalter (22) mittels der Werkzeugwechseleinrichtung (28), mittels einer Relativdrehung zwischen der Werkzeugwechseleinrichtung und dem Werkzeug wobei die Werkzeugwechseleinrichtung (28) in eine zweite Drehrichtung (34) gedreht wird, um ein beabsichtigtes Lösen des Werkzeugs (20) von dem Werkzeughalter (22) zu realisieren.

15. Verfahren nach einem der Ansprüche 12 bis 14, **dadurch gekennzeichnet, dass**, wenn die Vorrichtung (10) mehrere Werkzeuge (20) umfasst, alle Werkzeuge (20) zeitgleich von der Offenstellung (24) in die Geschlossenstellung (26) mittels der Werkzeugwechseleinrichtung (28) oder umgekehrt, überführt werden.

16. Verfahren nach einem der Ansprüche 12 bis 15, **dadurch gekennzeichnet, dass** das Verfahren den Schritt umfasst:
- Detektieren mittels mindestens einer Sensoreinrichtung (44) wie viele Werkzeuge (20) in der Vorrichtung (10) vorhanden sind und/oder ob die Werkzeuge (20) ordnungsgemäß gegriffen werden.

## Claims

1. Apparatus (10) for twisting conductor pieces (12) which have at least one leg (14), which are arranged in a stator (16) and protrude from the stator (16), wherein the apparatus (10) comprises:
- at least one cylindrical tool (20) for twisting the legs (14) of the conductor pieces (12) protruding from the stator (16), the tool (20) having a plurality of receptacles (21) which are circumferentially arranged around a radial wall (23) of the tool (20)
- at least one tool holder (22) for receiving the tool (20), the tool holder (22) comprising outer teeth and the tool (20) comprising inner teeth corresponding to the outer teeth of the tool holder (22)
- wherein the tool (20) can be transferred from an open position (24), in which the tool (20) can be connected to the tool holder (22) or released from the tool holder (22), to a closed position (26), in which the tool (20) can be locked when the tool (20) is connected to the tool holder (22), and vice versa,
- a tool changing device (28) which is designed to transfer the tool (20) from the open position (24) to the closed position (26), or vice versa,
- wherein the tool changing device (28) is designed to release the tool (20) from the tool holder (22) or to connect the tool to the tool holder (22), wherein the tool (20) has a locking disk (30), the locking disk (30) being fastened in the tool (20) by means of a fastening disk (31) and being arranged between a base (33) and the fastening disk (31) and being arranged so as to be rotatable about the axis of rotation (55), wherein the locking disk (30) is designed to transfer the tool (20) from the open position (24), so that the tool (20) can be placed on the tool holder (22) or removed from the tool holder (22), into the closed position (26), so that the tool (20) can be locked when the tool (20) is connected to the tool holder (22), by a relative rotation between the locking disk (30) and the tool (20), by a rotation of the locking disk (30) in a first direction of rotation (32) and/or a rotation of the tool (20) in a second direction of rotation (34), and wherein the locking disk (30) is further designed to transfer the tool (20) from the closed position (26) to the open position (24) by a relative rotation between the locking disk (30) and the tool (20), by a rotation of the locking disk (30) in the second direction of rotation (34) and/or a rotation of the tool (20) in the first direction of rotation (32).

2. Apparatus (10) according to claim 1, **characterized in that** the locking disk (30) is designed to be connectable to the tool holder (22) by means of a bayonet connection in order to produce a form-fitting connection between the tool (20) and the tool holder (22) in the axial direction (18).

3. Apparatus (10) according to claim 1 or 2, **characterized in that** the locking disk (30) is designed to be connectable to the tool holder (22) by means of radially movable pins, in order to produce a form-fitting connection between the tool (20) and the tool holder (22) in the axial direction (18).

4. Apparatus (10) according to any of the preceding claims,
**characterized in that** the locking disk (30) comprises an extension (36) having a recess (38), the tool (20) comprises at least one opening (40) and the tool changing device (28) comprises at least one actuation unit (42), wherein the extension (36), the recess (38), the opening (40) and/or the actuation unit (42) are designed such that the actuation unit (42) can engage in the recess (38) of the extension (36) through the opening (40), in order to pivot the extension (36) in the first direction of rotation (32) or in the second direction of rotation (34) by means of a relative rotation between the actuation unit (42), in particular the tool changing device (28), and the tool, and therefore to rotate the locking disk (30) in the first direction of rotation (32) or in the second direction of rotation (34).

5. Apparatus (10) according to claim 4, **characterized in that** the tool changing device (28) has at least one sensor device (44), wherein the sensor device (44) is designed to detect whether the actuation unit (42) engages in the recess (38) of the extension (36).

6. Apparatus (10) according to claim 4 or 5, **characterized in that** the tool changing device (28) has at least one arm, wherein the actuation unit (42) are arranged along the arm, wherein the arm is designed to be radially movable.

7. Apparatus (10) according to any of claims 4 to 6, **characterized in that** the tool changing device (28) has a first arm (46) and a second arm (48), wherein the actuation unit (42) is arranged along the first arm (46), wherein the first arm (22) and the second arm (48) are designed to be able to be moved toward one another or away from one another in a relative movement.

8. Apparatus (10) according to claim 7, **characterized in that** the second arm (46) has a locking unit (50) which is designed to be movable toward the first arm (46) and/or away from the first arm (46), wherein the tool (20) has at least one locking opening (52), wherein the locking unit (50) and the locking opening (52) are designed such that, in the open position (26) of the tool (20), the locking unit (50) can be inserted into the locking opening (52).

9. Apparatus (10) according to any of the preceding claims,
**characterized in that** the tool (20), the locking disk (30) and/or the tool holder (22) has at least one poka-yoke element.

10. Apparatus (10) according to any of the preceding claims,
**characterized in that** the locking disk (30) has at least one locking disk opening (54) for manually transferring the tool (20), by means of an external aid, from the open position (24) to the closed position (26), or vice versa.

11. Apparatus (10) according to any of the preceding claims,
**characterized in that** the apparatus (10) comprises a plurality of tools (20) which are arranged nested within one another, wherein the tools (20) can each be rotated independently of one another or together about a common axis of rotation (55) which is oriented in the axial direction (18) in the first direction of rotation (32) or in the second direction of rotation (34), in order to twist the legs (14) of the conductor pieces (12) protruding from the stator (16).

12. Method for fitting and/or removing at least one tool (20) of an apparatus (10) for twisting conductor pieces (12) which have at least one leg (14), which conductor pieces are arranged in a stator (16) and protrude from the stator (16), wherein the method comprises the steps of:
- providing an apparatus (10) according to any of the preceding claims;
- when the tool (20) is in the closed position (26), transferring the tool (20) to the open position (24) by means of a tool changing device (28),
- when the tool (20) is in the open position (24), connecting the tool (20) to the tool holder (22) or releasing the tool (20) from the tool holder (22) by means of the tool changing device (28) by a relative movement between the tool (20) and the tool holder (22) in an axial direction (18).

13. Method according to claim 12, **characterized in that** the method comprises the step of:
- when the tool (20) is connected to the tool holder (22) and is in the open position (24), locking the tool (20) on the tool holder (22) by means of the tool changing device (28) by means of a relative rotation between the tool changing device (28) and the tool (20), wherein the tool changing device (28) is rotated in a first direction of rotation (32) to prevent an unintentional release of the tool (20) from the tool holder (22).

14. Method according to claim 13, **characterized in that** the method comprises the step of,
- when the tool (20) is connected to the tool holder (22) and locked onto the tool holder (22), releasing the locking of the tool (20) to the tool holder (22) by means of the tool changing device (28), by means of a relative rotation between the tool changing device and the tool, wherein the tool changing device (28) is rotated in a second direction of rotation (34), in order to achieve an intended release of the tool (20) from the tool holder (22).

15. Method according to any of claims 12 to 14, **characterized in that,** when the apparatus (10) comprises a plurality of tools (20), all tools (20) are simultaneously transfered from the open position (24) to the closed position (26) or vice versa by means of the tool changing device (28).

16. Method according to any of claims 12 to 15, **characterized in that** the method comprises the step of:
- detecting, by means of at least one sensor device (44), how many tools (20) are present in the apparatus (10) and/or whether the tools (20) are gripped properly.

## Revendications

1. Dispositif (10) destiné à torsader des pièces conductrices (12) qui comportent au moins une patte (14), lesquelles sont disposées dans un stator (16) et émergent du stator (16), ledit dispositif (10) comprenant :
- au moins un outil cylindrique (20) destiné à torsader les pattes (14) des pièces conductrices (12) qui émergent du stator (16), l'outil (20) comporte une pluralité de logements (21) disposés en direction circonférentielle le long d'une paroi radiale (23) de l'outil (20)
- au moins un porte-outil (22) destiné à recevoir l'outil (20), le porte-outil (22) comporte une denture extérieure et l'outil (20) une denture intérieure correspondant à la denture extérieure du porte-outil (22)
- l'outil (20) peut être transféré d'une position ouverte (24), dans laquelle l'outil (20) peut être relié au porte-outil (22) ou en être détaché, à une position fermée (26), dans laquelle l'outil (20), lorsqu'il est relié au porte-outil (22), peut être verrouillé, et inversement,
- un dispositif de changement d'outil (28) conçu pour transférer l'outil (20) de la position ouverte (24) à la position fermée (26), ou inversement,
- le dispositif de changement d'outil (28) est conçu pour détacher l'outil (20) du porte-outil (22) ou pour le relier au porte-outil (22), l'outil (20) comporte un disque d'arrêt (30), le disque d'arrêt (30) est fixé au moyen d'une plaque de fixation (31) dans l'outil (20) et est disposé entre un fond (33) et la plaque de fixation (31), et monté pour être rotatif autour de l'axe de rotation (SS), - le disque d'arrêt (30) est conçu pour transférer l'outil (20) depuis la position ouverte (24), de sorte que l'outil (20) puisse être posé sur le porte-outil (22) ou retiré du porte-outil (22), vers la position fermée (26), de sorte que l'outil (20), lorsqu'il est relié au porte-outil (22), puisse être verrouillé, par une rotation relative entre le disque d'arrêt (30) et l'outil (20), par une rotation du disque d'arrêt (30) dans un premier sens de rotation (32) et/ou par une rotation de l'outil (20) dans un deuxième sens de rotation (34), et le disque d'arrêt (30) est en outre conçu pour transférer l'outil (20) de la position fermée (26) à la position ouverte (24) par une rotation relative entre le disque d'arrêt (30) et l'outil (20), par une rotation du disque d'arrêt (30) dans le deuxième sens de rotation (34) et/ou par une rotation de l'outil (20) dans le premier sens de rotation (32).

2. Dispositif (10) selon la revendication 1, **caractérisé en ce que** le disque d'arrêt (30) est conçu pour pouvoir être raccordé au porte-outil (22) au moyen d'une liaison à baïonnette, afin d'établir une connexion positive entre l'outil (20) et le porte-outil (22) le long de la direction axiale (18).

3. Dispositif (10) selon la revendication 1 ou 2, **caractérisé en ce que** le disque d'arrêt (30) est conçu pour pouvoir être raccordé au porte-outil (22) au moyen de goupilles déplacées radialement, afin d'établir une connexion positive entre l'outil (20) et le porte-outil (22) le long de la direction axiale (18).

4. Dispositif (10) selon l'une quelconque des revendications précédentes, **caractérisé en ce que** le disque d'arrêt (30) comporte un ergot (36) muni d'une encoche (38), l'outil (20) comporte au moins une ouverture (40) et le dispositif de changement d'outil (28) comporte au moins une unité d'actionnement (42), ledit ergot (36), l'encoche (38), l'ouverture (40) et/ou l'unité d'actionnement (42) étant agencés de sorte que l'unité d'actionnement (42) puisse, au travers de l'ouverture (40), s'engager dans l'encoche (38) de l'ergot (36), afin, par une rotation relative entre l'unité d'actionnement (42), en particulier le dispositif de changement d'outil (28), et l'outil, de basculer l'ergot (36) dans le premier sens de rotation (32) ou dans le deuxième sens de rotation (34) et ainsi de faire tourner le disque d'arrêt (30) dans le premier sens de rotation (32) ou dans le deuxième sens de rotation (34).

5. Dispositif (10) selon la revendication 4, **caractérisé en ce que** le dispositif de changement d'outil (28) comporte au moins un dispositif de détection (44), ledit dispositif de détection (44) étant configuré pour détecter si l'unité d'actionnement (42) s'engage dans l'encoche (38) de l'ergot (36).

6. Dispositif (10) selon la revendication 4 ou 5, **caractérisé en ce que** le dispositif de changement d'outil (28) comporte au moins un bras, ladite unité d'actionnement (42) étant disposée le long du bras, le bras étant conçu pour être mobile radialement.

7. Dispositif (10) selon l'une des revendications 4 à 6, **caractérisé en ce que** le dispositif de changement d'outil (28) comporte un premier bras (46) et un deuxième bras (48), ladite unité d'actionnement (42) étant disposée le long du premier bras (46), le premier bras (22) et le deuxième bras (48) étant conçus pour pouvoir effectuer un mouvement relatif les rapprochant l'un de l'autre ou les éloignant l'un de l'autre.

8. Dispositif (10) selon la revendication 7, **caractérisé en ce que** le deuxième bras (46) comporte une unité d'arrêt (50) conçue pour être mobile vers le premier bras (46) et/ou loin du premier bras (46), l'outil (20) comportant au moins une ouverture d'arrêt (52), ladite unité d'arrêt (50) et l'ouverture d'arrêt (52) étant conçues de sorte que, en position ouverte (26) de l'outil (20), l'unité d'arrêt (50) puisse être introduite dans l'ouverture d'arrêt (52).

9. Dispositif (10) selon l'une quelconque des revendications précédentes, **caractérisé en ce que** l'outil (20), le disque d'arrêt (30) et/ou le porte-outil (22) comportent au moins un élément Poka-Yoke.

10. Dispositif (10) selon l'une quelconque des revendications précédentes, **caractérisé en ce que** le disque d'arrêt (30) comporte au moins une ouverture du disque d'arrêt (54) permettant de transférer manuellement l'outil (20), au moyen d'un outil auxiliaire externe, de la position ouverte (24) à la position fermée (26), ou inversement.

11. Dispositif (10) selon l'une quelconque des revendications précédentes, **caractérisé en ce que** le dispositif (10) comprend plusieurs outils (20) disposés emboîtés les uns dans les autres, les outils (20) pouvant être tournés indépendamment les uns des autres ou conjointement autour d'un axe de rotation commun (55), orienté selon la direction axiale (18), dans le premier sens de rotation (32) ou dans le deuxième sens de rotation (34), afin de torsader les pattes (14) des pièces conductrices (12) qui émergent du stator (16).

12. Procédé pour monter et/ou démonter au moins un outil (20) d'un dispositif (10) destiné à torsader des pièces conductrices (12) qui comportent au moins une patte (14) disposée dans un stator (16) et en émergent, ledit procédé comprenant les étapes suivantes :
- Mise à disposition d'un dispositif (10) selon l'une quelconque des revendications précédentes ;
- Si l'outil (20) se trouve en position fermée (26), transfert de l'outil (20) en position ouverte (24) au moyen du dispositif de changement d'outil (28),
- Lorsque l'outil (20) se trouve en position ouverte (24), mise en liaison de l'outil (20) avec le porte-outil (22) ou détachement de l'outil (20) du porte-outil (22) au moyen du dispositif de changement d'outil (28) par un mouvement relatif entre l'outil (20) et le porte-outil (22) le long d'une direction axiale (18).

13. Procédé selon la revendication 12, **caractérisé en ce que** le procédé comprend en outre l'étape consistant à :
- Lorsque l'outil (20) est relié au porte-outil (22) et se trouve en position ouverte (24), verrouillage de l'outil (20) sur le porte-outil (22) au moyen du dispositif de changement d'outil (28) par une rotation relative entre le dispositif de changement d'outil (28) et l'outil (20), le dispositif de changement d'outil (28) étant tourné dans une première direction de rotation (32) pour empêcher un desserrage involontaire de l'outil (20) du porte-outil (22).

14. Procédé selon la revendication 13, **caractérisé en ce que** le procédé comprend en outre l'étape consistant à :
- Lorsque l'outil (20) est relié au porte-outil (22) et est verrouillé sur le porte-outil (22), déverrouillage de l'outil (20) du porte-outil (22) au moyen du dispositif de changement d'outil (28), au moyen d'une rotation relative entre le dispositif de changement d'outil et l'outil, le dispositif de changement d'outil (28) étant tourné dans une deuxième direction de rotation (34) pour réaliser le desserrage intentionnel de l'outil (20) du porte-outil (22).

15. Procédé selon l'une des revendications 12 à 14, **caractérisé en ce que**, lorsque le dispositif (10) comprend plusieurs outils (20), tous les outils (20) sont transférés simultanément de la position ouverte (24) à la position fermée (26) au moyen du dispositif de changement d'outil (28) ou inversement.

16. Procédé selon l'une des revendications 12 à 15, **caractérisé en ce que** le procédé comprend l'étape :
- Détection au moyen d'au moins un dispositif de détection (44) du nombre d'outils (20) présents dans le dispositif (10) et/ou détermination si les outils (20) sont correctement saisis.
